# EUROPÄISCHE PATENTSCHRIFT

(11) **EP 2 322 358 B1**
(45) Veröffentlichungstag und Bekanntmachung des Hinweises auf die Patenterteilung: **07.03.2018**
(21) Anmeldenummer: 10188986.3
(22) Anmeldetag: 27.10.2010
(51) Int. Cl.: B60C 1/00, C08K 3/36

(54) **Kautschukmischung**
Rubber composition
Mélange de caoutchouc

(30) Priorität: 09.11.2009 DE 102009044466
(43) Veröffentlichungstag der Anmeldung: 18.05.2011
(73) Patentinhaber: Continental Reifen Deutschland GmbH, 30165 Hannover (DE)
(72) Erfinder: Müller, Norbert, 29336, Nienhagen (DE); Wagemann, Jürgen, 31162, Bad Salzdethfurth (DE); Tkachenko, Viktoriya, 30171, Hannover (DE)
(74) Vertreter: Finger, Karsten

(56) Entgegenhaltungen:
- EP-A1- 0 784 072
- EP-A1- 0 849 313
- EP-A1- 2 098 384
- EP-A1- 2 154 192
- EP-A1- 2 233 317
- DE-T2- 69 523 958

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.
Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So zieht eine Verbesserung des Trockenbremsens weiterhin in der Regel eine Verschlechterung des Rollwiderstandes und der Wintereigenschaften nach sich. Diese Eigenschaften sind auch bei technischen Gummiartikeln, wie Gurte, Riemen und Schläuche, ein wichtiges Qualitätskriterium.

Um diese Zielkonflikte zu lösen, sind schon vielfältige Ansätze verfolgt worden. So hat man beispielsweise unterschiedlichste, auch modifizierte, Polymere, Weichmacher und hochdisperse Füllstoffe für Kautschukmischungen eingesetzt und man hat versucht, die Vulkanisateigenschaften durch Variationen der Mischungszusammensetzung zu beeinflussen.
So ist beispielsweise aus EP1375199A1 bekannt, Kurzfasern in die Kautschukmischung für den Laufstreifen eines Reifens einzumischen oder aus US 5,246,985 Zellulosematerial zu verwenden, um die Wintereigenschaften zu verbessern.
Ebenso wird versucht durch eher konstruktive Maßnahmen eine Verbesserung der Wintereigenschaften zu erzielen. So wird beispielsweise in US 5,840,137 der Laufstreifen kompositartig mit verschiedenen Kautschukzusammensetzungen aufgebaut oder in DE 10 2004 002 255 A1 ein hartes und dennoch flexibles Kunststoffgewebe in den Laufstreifen integriert.
Allen diesen Maßnahmen ist jedoch gemein, dass sie sich eher negativ auf mindestens eine weitere Reifeneigenschaft auswirken, insbesondere das Trockenbremsverhalten vor allem bei niedrigen Temperaturen beeinträchtigen.
Weitere Kautschukmischungen, die Polyisopren oder Polybutadien und Kieselsäure enthalten sind aus der EP 2 233 317 A1, der EP 2 154 192 A1, der DE 695 23 958 T2, der EP 2 098 384 A1, der EP 0 849 313 A1 und der EP 0 784 072 A1 bekannt.
Der Erfindung liegt daher die Aufgabe zu Grunde, eine Kautschukmischung, insbesondere für Fahrzeugluftreifen, Gurte und Riemen, bereitzustellen, die ein verbessertes Trockenbremsverhalten, insbesondere bei niedrigeren Temperaturen, aufweist, während die weiteren physikalischen Eigenschaften, insbesondere der Scheegriff, auf einem gleichen oder besseren Niveau verbleiben.
Gelöst wird diese Aufgabe durch eine Kautschukmischung mit folgender Zusammensetzung:
- 80 bis 100 phr zumindest eines natürlichen oder synthetischen Polyisoprens oder zumindest eines Polybutadienkautschuks mit einem Vinylanteil von 40 bis 90 Gew. -% und
- 0,1 bis 120 phr zumindest eines Weichmachers und
- 70 bis 250 phr zumindest einer Kieselsäure und
- 0,1 bis 40 phr zumindest eines Mercaptosilans und
- weitere Zusatzstoffe.

Überraschenderweise wurde gefunden, dass eine Kautschukmischung mit obiger Zusammensetzung ein deutlich verbessertes Trockenbremsverhalten, insbesondere bei niedrigeren Temperaturen, wie sie beispielsweise in Mitteleuropa in den Wintermonaten zu finden sind, aufweist. Gleichzeitig bleibend die weiteren physikalischen Eigenschaften, wie beispielsweise der Rollwiderstand, auf gleichem Niveau bzw. werden sogar auf ein besseres Niveau gehoben.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung enthält 80 bis 100 phr, bevorzugt 90 bis 100 phr und besonders bevorzugt 95 bis 100 phr, zumindest eines natürlichen oder synthetischen Polyisoprens oder 80 bis 100 phr, bevorzugt 90 bis 100 phr und besonders bevorzugt 95 bis 100 phr zumindest eines Polybutadienkautschuks mit einem Vinylanteil von 40 bis 90 Gew. -%. Besonders gute Trockenbremseigenschaften ergeben sich, wenn der Polybutadienkautschuk einen Vinylanteil von 40 bis 85 Gew. -% hat.

Weiterhin enthält die Kautschukmischung 0 bis 20 phr, bevorzugt 0 bis 10 phr, besonders bevorzugt 0 bis 5 phr, zumindest eines weiteren polaren oder unpolaren Kautschuk, welcher ausgewählt ist aus der Gruppe, bestehend aus Butadien-Kautschuk, der nicht dem bereits oben genanntem Typ entspricht, und / oder Styrolbutadienkautschuk und / oder lösungspolymerisiertem Styrolbutadienkautschuk und / oder emulsionspolymerisiertem Styrolbutadienkautschuk und / oder Halobutylkautschuk und / oder Polynorbornen und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder Halonitrilbutylkautschuk und / oder Isopren-Butylen-Copolymer.

Kombinationen der genannten polaren und unpolaren Kautschuke sind durchaus möglich.

Es hat sich als vorteilhaft gezeigt, wenn es sich hierbei um einen lösungspolymerisierten oder emulsionspolymerisierten Styrolbutadienkautschuk handelt. Dieser findet dann vorzugsweise Verwendung in Mengen von 0 bis 10 phr, bevorzugt 0 bis 5 phr, wenigstens aber in Mengen von 0,1 phr, insbesondere wenigstens aber in Mengen von 0,5 phr.
Der lösungspolymerisierte oder emulsionspolymerisierte Styrolbutadienkautschuk kann vollständig oder teilweise funktionalisiert sein. Die Funktionalisierung findet hierbei vorzugsweise durch Hydroxylgruppen und / oder Epoxygruppen und / oder Siloxangruppen und / oder Aminogruppen und / oder Phtalocyaningruppen und / oder Aminosiloxangruppen und / oder mit Carboxygruppen statt. Es kommen aber auch weitere, der fachkundigen Person bekannte Funktionalisierungen, auch als Modifizierungen bezeichnet, in Frage.

Es sind in der Kautschukmischung noch 0,1 bis 120 phr, bevorzugt bis zu 100 phr, besonders bevorzugt bis zu 80 phr, insbesondere wenigstens 0,5 phr, zumindest eines Weichmachers vorhanden.
Dieser Weichmacher ist ausgewählt aus der Gruppe, bestehend aus Mineralölen und / oder synthetischen Weichmachern und / oder Faktisse und / oder Glyceriden und / oder Fettsäuren und / oder Fettsäurederivaten und / oder Terpenen und / oder flüssige Polymere mit einem Molekulargewicht M_{w} zwischen 1500 und 10000 g / mol und / oder Saatenöle und / oder BiomassToLiquid- (BTL-)Öle.
Die Verwendung von Mineralölen und / oder flüssigen Polymeren mit einem Molekulargewicht M_{w} zwischen 500 und 10000 g / mol hat sich als besonders vorteilhaft herausgestellt. Das Molekulargewicht M_{w} wurde hierbei mittels NMR bestimmt.
Bei der Verwendung von Mineralöl als Weichmacher ist dieses bevorzugt ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.
Als Saatenöle kommen beispielsweise Rapsöl und /oder Sonnenblumenöl in Frage.

In einer besonders vorteilhaften Ausgestaltung der Erfindung enthält die Kautschukmischung wenigstens ein Harz. Das Harz wird in einer bevorzugten Ausführungsform in Mengen von 1 bis 30 phr, bevorzugt 1 - 20 phr und besonders bevorzugt in Mengen von 1 bis 10 phr eingesetzt. Als Harz können alle der fachkundigen Person bekannten Harze, die üblicherweise in der Kautschukindustrie eingesetzt werden, verwendet werden. So können beispielsweise folgende Harze eingesetzt werden: Kohlenwasserstoffharze auf Basis von z.B. Terpenphenol (wie Sylvares TR B115 von Arizon Chemical Products), Polyterpen (Kolophonium), α-Limonen, β-Pinen, Inden-Cumaron-Harze, Phenolharze, Pentaerythritester.
Besonders vorteilhaft hat sich allerdings die Verwendung von zumindest einem aliphatischen Kohlenwasserstoffharz oder einem aromatischen Kohlenwasserstoffharz gezeigt.
Bevorzugt hat das aliphatische Kohlenwasserstoffharz einen Hansen-Wechselwirkungsparamter δ (solubility parameter) zwischen 8,0 und 9,0 MPa^{1/2}, bevorzugt zwischen 8,1 und 8,6 MPa^{1/2}.
Die Wechselwirkungsparamter δ sind im Polymer Handbook, John Wiley & Sons, Inc., Fourth edition (1999) beschrieben. Zur Theorie und Bestimmung der Wechselwirkungsparameter sei an dieser Stelle auf die Literatur "Solubility Parameters: Theory and Application" von John Burke (1984) verwiesen, welche unter http://206.180.235.133/sg/bpg/annual/v03/bp03-04.html abrufbar ist.

Erfindungsgemäß enthält die Kautschukmischung 70 bis 250 phr, bevorzugt 80 bis 200 phr, besonders bevorzugt 80 bis 150 phr, Kieselsäure. Erst durch die Kombination der vergleichsweise hohen Menge von natürlichem oder synthetischem Polyisopren oder Polybutadienkautschuk mit einem Vinylanteil von 40 bis 100 Gew. -% mit einem derartigen Anteil an Kieselsäure zeigt sich der geforderte Effekt.

Es können alle der fachkundigen Person bekannten Kieselsäuretypen verwendet werden. Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Vorteilhafterweise werden Kieselsäuren mit einer Stickstoff-Oberfläche größer oder gleich 100 m²/g, bevorzugt zwischen 120 und 300 m²/g, besonders bevorzugt zwischen 140 und 250 m²/g, und einer CTAB-Oberfläche zwischen 100 und 250 m²/g, bevorzugt zwischen 120 und 230 m²/g und besonders bevorzugt zwischen 140 und 200 m²/g, eingesetzt.

Als Kupplungsagens wird ein Mercaptosilan verwendet, dessen Menge 0,1 bis 40 phr, bevorzugt 1 bis 30 phr, besonders bevorzugt 1,5 bis 15 phr, ganz besonders bevorzugt 2 bis 12 phr beträgt.

Besonders vorteilhaft sind hierbei solche Mercaptosilane, welche sich durch
eine Reduzierung der leicht flüchtigen organischen Bestandteile auszeichnen, wie sie, beispielhaft für weitere Druckschriften, in DE102005057801, WO99/09036, WO2002/048256 und WO2006/015010 zu finden sind.
Derartige Mercaptosilane sind zum Beispiel unter dem Handelsnamen Si363 von Evonik Industries erhältlich. Es können aber auch die unter den Handelsnamen bekannten NXT-, NXT low VOC- oder NXT-Z-Typen, erhältlich von Momentive Performance Materials inc., verwendet werden.
Die Verwendung eines solchen Mercaptosilans zeigt besondere Vorteile hinsichtlich des Trockenbremsverhaltens, insbesondere wenn bevorzugt ein geblocktes Mercaptosilan verwendet wird. Ein geblocktes Mercaptosilan ist ein, vorzugsweise durch eine Carbonssäure, an der Mercaptogruppe geschütztes Mercaptosilan.

Des Weiteren enthält die erfindungsgemäße Kautschukmischung 0 bis 30 phr, wenigstens aber 0,1 phr, insbesondere wenigstens 0,5 phr, zumindest eines Rußes. Hier kommen alle der fachkundigen Person bekannten Ruße in Frage.

In einer besonders bevorzugten Ausführungsform hat der Ruß eine Iodzahl, gemäß ASTM D 1510, die auch als Iodadsorptionszahl bezeichnet wird, größer oder gleich 75 g / kg und einer DBP-Zahl größer oder gleich 80 cm³ /100g, bevorzugt größer oder gleich 115 cm³ /100g.
Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Russtyps in der Kautschukmischung, insbesondere für Fahrzeugluftreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Russtyp in der jeweiligen Kautschukmischung verwendet wird, es können aber auch verschiedene Russtypen in die Kautschukmischung eingemischt werden.

Weiterhin enthält die Kautschukmischung noch weitere Zusatzstoffe.
Weitere Zusatzstoffe beinhaltet im Wesentlichen das Vernetzungssystem (Vernetzer, Schwefelspendern und / oder elementaren Schwefel, Beschleuniger und Verzögerer), Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 - 80 phr.
Als Alterungsschutzmittel sind beispielsweise N-Phenyl-N'-(1,3-dimethylbutyl)-p-phenylendiamin (6PPD), N-Isopropyl-N'-phenyl-p-phenylendiamin (IPPD), 2,2,4-Trimenthyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, zu erwähnen.

Im Gesamtmengenanteil der weiteren Zusatzstoffe finden sich noch 0,1 - 10 phr, bevorzugt 0,2 - 8 phr, besonders bevorzugt 0,2 - 4 phr, Zinkoxid.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation der Kautschukmischung wird vorzugsweise in Anwesenheit von elementarem Schwefel oder Schwefelspendern durchgeführt, wobei einige Schwefelspender zugleich als Vulkanisationsbeschleuniger wirken können. Elementarer Schwefel oder Schwefelspender werden im letzten Mischungsschritt in den vom Fachmann gebräuchlichen Mengen (0,4 bis 10 phr, elementarer Schwefel bevorzugt in Mengen von 0 bis 6 phr, besonders bevorzugt in Mengen von 0,1 bis 4 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer und Vulkanisationsaktivatoren, die in den obig beschriebenen Zusatzstoffen enthalten sind, enthalten.
Vorteilhaft ist es, wenn die erfindungsgemäße Kautschukmischung 0,1 bis 6 phr, bevorzugt 1 bis 5 phr, zumindest eines Vulkanisationsbeschleunigers enthält.
Der Vulkanisationsbeschleuniger ist bevorzugt ausgewählt ist aus der Gruppe der Sulfenamidbeschleuniger und / oder Thiazolbeschleuniger und / oder Thiurambeschleuniger und / oder Mercaptobeschleuniger und / oder Dithiocarbamatbeschleuniger und /oder Aminbeschleuniger und / oder Dithiophosphate und / oder Thioharnstoffe, wobei Sulfenamidbeschleuniger und / oder Guanidinbeschleuniger bevorzugt sind.
Als Sulfenamidbeschleuniger findet bevorzugt Benzothiazyl-2-cyclohexylsulfenamid (CBS) und als Guandidinbeschleuniger bevorzugt Diphenylguanidin (DPG) Verwendung.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt.

Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Reifen, insbesondere zur Herstellung des Laufstreifens eines Reifens und / oder einer Body-Mischung eines Reifens und zur Herstellung von Riemen, Gurten und Schläuchen zu verwenden.
Bei dem Reifen kann es sich um einen LKW-Reifen, einen PKW-Reifen oder um einen Zweiradreifen handeln. Bevorzugt ist allerdings die Verwendung der erfindungsgemäßen Kautschukmischung in einem PKW-Reifen und zwar dort bevorzugt als Kautschukmischung für den Laufstreifen.

Als Body-Mischung eines Reifens werden im Wesentlichen die Kautschukmischungen für Seitenwand, Innenseele, Apex, Gürtel, Schulter, Gürtelprofil, Squeege, Karkasse, Wulstverstärker und / oder Bandage bezeichnet.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweiteilig oder auch mehrteilig, so findet die Kautschukmischung bevorzugt Anwendung als Mischung für die Cap.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings.
Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt. Die Herstellung der Schläuche erfolgt zumeist analog dem im Handbuch der Kautschuktechnologie, Dr. Gupta Verlag, 2001, Kapitel 13.4 beschriebenen Verfahren.

Die Erfindung soll nun anhand von Vergleichs- und Ausführungsbeispielen, die in Tabellen 1 bis 4 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).
Die in den Tabellen 2 und 4 zusammengefassten Versuchsergebnisse wurden an Reifen der Größe 205/55 R16 ermittelt. Hierzu wurde jeweils die Kautschukmischung für die Lauffläche des Reifens analog den in der Tabelle 1 bzw. 3 dargestellten Zusammensetzungen hergestellt.

Das ABS-Nassbremsverhalten wurde bestimmt durch den Bremsweg aus 80 km/h bei nasser Fahrbahn.
Das ABS-Trockenbremsverhalten wurde bestimmt durch den Bremsweg aus 100 km/h bei trockener Fahrbahn.
Der Rollwiderstand entspricht der Rollwiderstandskraft, die auf der entsprechenden Maschine bei 90 km/h gemessen wird.
Der Schneegriff wurde als Schneetraktion, also als Beschleunigungsvermögen beim Anfahren im 1. Gang in m/sec², bestimmt, siehe Tabelle 2, oder durch Bergauf-Zeitfahren auf Schnee, dem so genannten uphill driving objective, bestimmt, siehe Tabelle 4.

**Tabelle 1**

| **Bestandteile** | **Einheit** | **V1** | **V2** | **V3** | **V4** | **V6** | **E2** | **E3** |
|---|---|---|---|---|---|---|---|---|
| NR^{a} | phr | 10 | 10 | -- | -- | 100 | 100 | 100 |
| BR / SBR^{b} | phr | 20/70 | 20/70 | 25/75 | 25/75 | -- | -- | -- |
| Kieselsäure' | phr | 90 | 90 | 70 | 70 | 90 | 90 | 90 |
| Ruß, N339 | phr | 10 | 10 | 5 | 5 | 10 | 10 | 10 |
| Silan^{d} | phr | 6,85 | -- | 5,2 | -- | 6,5 | -- | -- |
| Silan^{e} | phr | -- | 11,5 | -- | 8,54 | -- | 10,8 | 10,8 |
| Weichmacher^{f} | phr | 40 | 40 | 5 | 5 | 50 | 50 | 43 |
| Harz^{g} | phr | -- | -- | -- | -- | -- | -- | 7 |
| ZnO | phr | 2 | 2 | 2 | 2 | 3 | 3 | 3 |
| Alterungsschutzmittel /Ozonschutzmittel | phr | 4 | 4 | 4 | 4 | 4 | 4 | 4 |
| DPG | phr | 2,1 | 2,1 | 1,5 | 1,5 | 1,87 | 1,87 | 1,87 |
| CBS | phr | 2,6 | 2,6 | 2,5 | 2,5 | 2,52 | 2,52 | 2,52 |
| Schwefel | phr | 2,1 | 2,1 | 1,7 | 1,7 | 3,28 | 3,28 | 3,28 |

| | | | | | | | | |
|---|---|---|---|---|---|---|---|---|
| ^{a}TSR; ^{b}NS616, Fa. Zeon; ^{c}Zeosil 1165MP, Fa. Rhodia (BET 149 m²/g, CTAB 154 m²/g); ^{d}TESPD, Si266, Fa. Evonik; ^{e}NXT-Low-VOC, Fa. Momentive Performance Materials; ^{f}flüssiger Polybutadienkautschuk, Ricon 130, Fa. Sartomer ^{g}aliphatisches Kohlenwasserstoffharz, C5-Harz, Escorez 1102, Fa. Exxon Mobil. | | | | | | | | |

**Tabelle 2**

| **Reifeneigenschaft** | **V1** | **V2** | **V3** | **V4** | **V6** | **E2** | **E3** |
|---|---|---|---|---|---|---|---|
| ABS-Trockenbremsen | 100 | 96 | 95 | 92 | 101 | 105 | 106 |
| ABS-Nassbremsen | 100 | 100 | 92 | 97 | 97 | 94 | 97 |
| Rollwiderstand | 100 | 106 | 110 | 115 | 92 | 95 | 94 |
| Schneetraktion | 100 | 99 | 94 | 95 | 104 | 104 | 105 |

Die Zahlenangaben sind normiert, d.h. die Standard-Referenz V1 ist auf 100 normiert. Werte größer 100 bedeuten eine Verbesserung der jeweiligen Reifeneigenschaft und Werte kleiner 100 dementsprechend eine Verschlechterung der jeweiligen Reifeneigenschaft. Anhand der Tabelle 2 zeigt sich, dass bei Verwendung einer erfindungsgemäßen Kautschukmischung, siehe E2 und E3, sich das Trockenbremsverhalten deutlich verbessern lässt und gleichzeitig der Schneegriff, dargestellt als Schneetraktion und ein Indiz für die Wintereigenschaft, signifikant optimiert wird.

**Tabelle 3**

| **Bestandteile** | **Einheit** | **V5** | **V7** |
|---|---|---|---|
| HV-BR^{h} | phr | -- | 80 |
| BR / SBRⁱ | phr | 20/80 | 20/0 |
| Kieselsäure^{j} | phr | 90 | 90 |
| Silan^{k} | phr | 6,5 | 6,5 |
| Weichmacher^{l} | phr | 40 | 40 |
| ZnO | phr | 2 | 2 |
| Alterungsschutzmittel /Ozonschutzmittel | phr | 4 | 4 |
| DPG | phr | 2,1 | 2,1 |
| CBS | phr | 2,6 | 2,6 |
| Schwefel | phr | 2,1 | 2,1 |

| | | | |
|---|---|---|---|
| ^{h}HV-BR (hoch-Vinyl-BR), Europrene, Fa. Polimeri, vinyl : 80 Gew. -%; ⁱHPR 350, Fa. JSR, styrol: 20 Gew. -%, vinyl: 55 Gew.- %; ^{j}Zeosil 1165MP, Fa. Rhodia (BET 149 m²/g, CTAB 154 m²/g) ^{k}TESPD, Si266, Fa. Evonik ^{l}flüssiger Polybutadienkautschuk, Ricon130, Fa. Sartomer | | | |

**Tabelle 4**

| **Reifeneigenschaft** | **V1** | **V5** | **V7** |
|---|---|---|---|
| ABS-Trockenbremsen | 100 | 99 | 101 |
| ABS-Nassbremsen | 100 | 100 | 100 |
| Rollwiderstand | 100 | 98 | 94 |
| Schneetraktion | 100 | 98 | 101 |

Die Zahlenangaben sind normiert, d.h. die Standard-Referenz V1 ist auf 100 normiert. Werte größer 100 bedeuten eine Verbesserung der jeweiligen Reifeneigenschaft und Werte kleiner 100 dementsprechend eine Verschlechterung der jeweiligen Reifeneigenschaft. Anhand der Tabelle 4 zeigt sich, dass bei Verwendung einer Kautschukmischung gemäß V7 sich das Trockenbremsverhalten deutlich verbessern lässt und gleichzeitig der Schneegriff, dargestellt als Schneetraktion und ein Indiz für die Wintereigenschaft, signifikant optimiert wird.

## Patentansprüche

1. Kautschukmischung, **gekennzeichnet durch** folgende Zusammensetzung:
- 80 bis 100 phr zumindest eines natürlichen oder synthetischen Polyisoprens oder zumindest eines Polybutadienkautschuks mit einem Vinylanteil von 40 bis 90 Gew. -% und
- 0,1 bis 120 phr zumindest eines Weichmachers und
- 70 bis 250 phr zumindest einer Kieselsäure und
- 0,1 bis 40 phr zumindest eines Mercaptosilans und
- weitere Zusatzstoffe.

2. Kautschukmischung nach Anspruch 1, **dadurch gekennzeichnet, dass** sie 0 bis 20 phr wenigstens eines weiteren polaren oder unpolaren Kautschuks enthält.

3. Kautschukmischung nach einem der Ansprüche 1 bis 2, **dadurch gekennzeichnet, dass** sie bis zu 100 phr zumindest eines Weichmachers enthält.

4. Kautschukmischung nach einem der Ansprüche 1 bis 3, **dadurch gekennzeichnet, dass** sie wenigstens 0,5 phr zumindest eines Weichmachers enthält.

5. Kautschukmischung nach einem der Ansprüche 1 bis 4, **dadurch gekennzeichnet, dass** sie wenigstens ein Harz enthält.

6. Kautschukmischung nach Anspruch 5, **dadurch gekennzeichnet, dass** das Harz ein aliphatisches Kohlenwasserstoffharz oder ein aromatisches Kohlenwasserstoffharz ist.

7. Verwendung einer Kautschukmischung nach einem der Ansprüche 1 bis 6 zur Herstellung eines Reifens.

8. Verwendung einer Kautschukmischung nach Anspruch 7 zur Herstellung eines Laufstreifens und / oder einer Body-Mischung eines Reifens.

## Claims

1. Rubber mixture, **characterized by** the following composition:
- from 80 to 100 phr of at least one natural or synthetic polyisoprene or at least one polybutadiene rubber with from 40 to 90% by weight vinyl content and
- from 0.1 to 120 phr of at least one plasticizer and
- from 70 to 250 phr of at least one silica and
- from 0.1 to 40 phr of at least one mercaptosilane and
- further additives.

2. Rubber mixture according to Claim 1, **characterized in that** it comprises from 0 to 20 phr of at least one other polar or nonpolar rubber.

3. Rubber mixture according to either of Claims 1 and 2, **characterized in that** it comprises up to 100 phr of at least one plasticizer.

4. Rubber mixture according to any of Claims 1 to 3, **characterized in that** it comprises at least 0.5 phr of at least one plasticizer.

5. Rubber mixture according to any of Claims 1 to 4, **characterized in that** it comprises at least one resin.

6. Rubber mixture according to Claim 5, **characterized in that** the resin is an aliphatic hydrocarbon resin or an aromatic hydrocarbon resin.

7. Use of a rubber mixture according to any of Claims 1 to 6 for the production of a tyre.

8. Use of a rubber mixture according to Claim 7 for the production of a tread and/or a body mixture of a tyre.

## Revendications

1. Mélange de caoutchouc, **caractérisé par** la composition suivante :
- 80 à 100 pce d'au moins un polyisoprène naturel ou synthétique ou d'au moins un caoutchouc de polybutadiène ayant une proportion de vinyle de 40 à 90 % en poids, et
- 0,1 à 120 pce d'au moins un plastifiant, et
- 70 à 250 pce d'au moins une silice, et
- 0,1 à 40 pce d'au moins un mercaptosilane et
- d'autres additifs.

2. Mélange de caoutchouc selon la revendication 1, **caractérisé en ce qu'**il contient 0 à 20 pce d'au moins un autre caoutchouc polaire ou apolaire.

3. Mélange de caoutchouc selon l'une quelconque des revendications 1 à 2, **caractérisé en ce qu'**il contient jusqu'à 100 pce d'au moins un plastifiant.

4. Mélange de caoutchouc selon l'une quelconque des revendications 1 à 3, **caractérisé en ce qu'**il contient au moins 0,5 pce d'au moins un plastifiant.

5. Mélange de caoutchouc selon l'une quelconque des revendications 1 à 4, **caractérisé en ce qu'**il contient au moins une résine.

6. Mélange de caoutchouc selon la revendication 5, **caractérisé en ce que** la résine est une résine hydrocarbonée aliphatique ou une résine hydrocarbonée aromatique.

7. Utilisation d'un mélange de caoutchouc selon l'une quelconque des revendications 1 à 6 pour la fabrication d'un pneu.

8. Utilisation d'un mélange de caoutchouc selon la revendication 7 pour la fabrication d'une bande de roulement et/ou d'un mélange de corps d'un pneu.
